# EUROPÄISCHE PATENTSCHRIFT

(11) **EP 2 307 751 B1**
(45) Veröffentlichungstag und Bekanntmachung des Hinweises auf die Patenterteilung: **21.03.2012**
(21) Anmeldenummer: 09777396.4
(22) Anmeldetag: 23.07.2009
(51) Int. Cl.: F16D 55/2265, F16J 3/04

(54) **AN EINEM FÜHRUNGSHOLM EINER SCHEIBENBREMSE ANGEORDNETER FALTENBALG**
BELLOWS DISPOSED ON A GUIDE MEMBER OF A DISK BRAKE
SOUFFLET DISPOSÉ SUR UN LONGERON DE GUIDAGE D UN FREIN À DISQUE

(30) Priorität: 25.07.2008 DE 102008034652
(43) Veröffentlichungstag der Anmeldung: 13.04.2011
(73) Patentinhaber: Knorr-Bremse Systeme für Nutzfahrzeuge GmbH, 80809 München (DE)
(72) Erfinder: GRUBER, Markus, 85560 Ebersberg (DE); NESMJANOWITSCH, Igor, 94491 Hengersberg (DE)
(74) Vertreter: Mattusch, Gundula
(86) Internationale Anmeldenummer: PCT/EP2009/005355
(87) Internationale Veröffentlichungsnummer: WO 2010/009884

(56) Entgegenhaltungen:
- FR-A- 2 771 148
- JP-A- 55 076 227
- US-A- 4 235 313
- US-A- 4 530 506
- US-A1- 2002 050 428

## Beschreibung

Die Erfindung betrifft einen an einem Führungsholm einer Scheibenbremse angeordneten Faltenbalg gemäß dem Oberbegriff des Anspruchs 1.

Zum Schutz der Führungsholme, auf denen beispielsweise der Bremssattel einer Schiebesattel-Scheibenbremse verschiebbar gelagert ist, sind Faltenbälge vorgesehen, die jeweils endseitig am Führungsholm und an dem relativ dazu bewegbaren Bauteil, beispielsweise dem genannten Bremssattel, befestigt sind. DE 10 2004 003 083 A1 offenbart einen Faltenbalg gemäß dem Oberbegriff des Anspruchs 1.

Hierdurch wird verhindert, dass Schmutz in den Gleitbereich eindringt und damit die Gleiteigenschaften herabgesetzt bzw. zerstört werden. Dies gilt gleichermaßen für Feuchtigkeit, die ansonsten eindringen und zu Korrosionsschäden führen könnte.

Der Faltenbalg ist einerseits formschlüssig am Führungsholm gehalten, wozu er an dem zugeordneten Ende einen Dichtring aufweist, der in einer umlaufenden Nut des Führungsholms einliegt und in dieser Position gesichert ist.

Andererseits ist der Faltenbalg im Bremssattel gehalten und gegenüber dem Führungsholm mittels einer Dichtlippe abgedichtet, die umlaufend am Führungsholm anliegt. Durch beide endseitigen Anlagen des Faltenbalgs am Führungsholm entsteht ein praktisch luftdichter Abschluss, durch den sich jedoch erhebliche Nachteile ergeben.

Beim Verschieben des Bremssattels relativ zum Führungsholm verändert sich das Volumen des vom Faltenbalg umschlossenen Bereichs. Die Luft kann jedoch nicht nach außen entweichen und bläht den Faltenbalg auf, wobei durch den entstehenden Überdruck die Dichtungslippe an den Führungsholm gepresst wird, mit der Folge einer besonders festen, luftdichten Anlage der Dichtlippe am Führungsholm.

Insbesondere bei einem Wechsel eines Bremsbelages, bei dem in sehr kurzer Zeit der Bremssattel entlang des Führungsholms verschoben wird, kann es vor allem beim Montieren eines folgenden, neuen Bremsbelages zu einer Beschädigung des Faltenbalgs kommen.

In diesem Fall ist ein Austausch des Faltenbalgs zwingend geboten, da ansonsten dessen Schutzfunktion nicht gewährleistet ist.

Darüber hinaus ergeben sich auch rein funktional Probleme durch den luftdichten Anschluss. So wirkt ein aufgeblähter Faltenbalg wie eine Luftfeder, die den Bremsbelag an eine Bremsscheibe der Scheibenbremse drückt, so dass während des Fahrbetriebs der Bremsbelag ständig an der Bremsscheibe anliegt, was zum Heißlaufen der Bremse führen kann, mit den sich daraus ergebenden, insbesondere sicherheitsrelevanten Problemen.

Um einen Druckausgleich in der durch den Faltenbalg gebildeten Kammer und der Umgebung zu erreichen, ist in der US 4 235 313 A vorgeschlagen, am Führungsholm einen Spreizkonus vorzusehen, der bei Erreichen einer bestimmten Stellung des Führungsholms gegenüber dem Bremssattel den Faltenbalg im Bereich von Dichtlippen radial so weit dehnt, dass durch vorgesehen Kanäle eine Be- bzw. Entlüftung der Kammer bewirkt wird.

Der Erfindung liegt die Aufgabe zugrunde, einen Faltenbalg der gattungsgemäßen Art so weiterzuentwickeln, dass die Funktions- bzw. Betriebssicherheit der Scheibenbremse insgesamt verbessert wird.

Diese Aufgabe wird durch einen Faltenbalg mit den Merkmalen des Anspruchs 1 gelöst.

Durch diese Ausbildung des Faltenbalgs wird gewährleistet, dass bei dessen Zusammenschieben ein Druckluftausgleich erfolgt, da durch die starre Verbindung der Dichtlippe mit der benachbarten Faltung aufgrund der überdruckbedingten Aufblähung des Faltenbalges insgesamt die Dichtlippe vom Führungsholm abgehoben wird, so dass die sozusagen überschüssige Luftmenge problemlos entweichen kann.

Vor allem bei dem zum Stand der Technik beschriebenen schnellen Zusammenschieben des Faltenbalges, wie es typisch ist bei einem Wechsel der Bremsbeläge, findet nun ein sofortiger Druckausgleich statt, zwischen dem vom Faltenbalg eingeschlossenen Innenraum und der Umgebung.

Dabei fungiert die Dichtlippe wie ein Rückschlagventil, da nach einem erfolgten Druckausgleich die Dichtlippe aufgrund der Rückstellkräfte wieder vollumfänglich dichtend am Führungsholm anliegt.

Nach einer vorteilhaften Weiterbildung der Erfindung kann die starre Verbindung der Dichtlippe mit der benachbarten Faltung durch angeformte Stege hergestellt sein, die den zwischen der Dichtlippe und der benachbarten Faltung vorhandenen Zwischenraum überbrücken.

Bei einer zweiteiligen Ausführung der Dichtlippe und des Faltenbalges können separate Stege vorgesehen sein, die sowohl mit dem Faltenbalg wie auch mit der Dichtlippe formschlüssig verbunden sind. Denkbar ist aber auch, an die Dichtlippe oder den Faltenbalg, jeweils als separates Teil zu sehen, die Stege anzuformen und mit dem jeweils anderen Teil durch Formschluss zu verbinden.

Die Anzahl der Stege sowie deren Dimensionierung können variieren und sind im Wesentlichen objektabhängig.

Das zum Stand der Technik beschriebene Belagschleifen wird nun ebenso wirkungsvoll verhindert, wie das Aufblähen der Faltenbälge beim Belagwechsel, wodurch die Gefahr einer Beschädigung der Bälge praktisch ausgeschlossen ist.

Da im Übrigen der Faltenbalg im Betrieb lediglich gestaucht, nicht jedoch gestreckt wird, d.h., dass durch die Erfindung lediglich die Entstehung eines erhöhten Innendrucks vermieden werden muss, sind Vorkehrungen, die einen Druckausgleich bei einer Streckung des Faltenbalges erforderlich machen würden, nicht vorzusehen, so dass die Realisierung der Erfindung mit äußerst einfachen Mitteln möglich ist.

Dies geht selbstverständlich einher mit einem sehr gering zu haltenden und daher äußerst kostengünstigen Fertigungs- und Montageaufwand, so dass die Erfindung im Grunde kostenneutral zu realisieren ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen erfindungsgemäßen Faltenbalg in einer teilmontierten Stellung in einem Längsschnitt
- Figur 2: einen Abschnitt des Faltenbalgs in einer geschnittenen perspektivischen Ansicht.

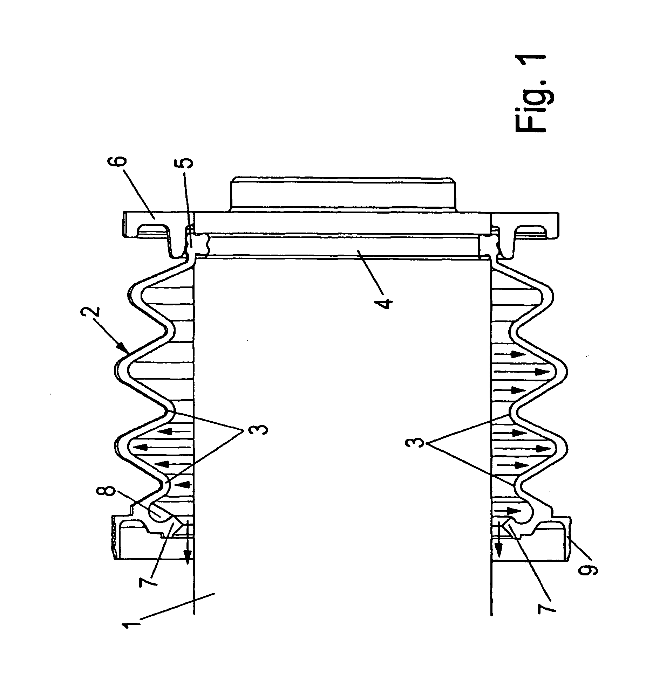

In der Figur 1 ist ein an einem Führungsholm 1 einer Scheibenbremse, insbesondere eines Nutzfahrzeuges, befestigter Faltenbalg 2 dargestellt, der mehrere Faltungen 3 aufweist und der an einem Ende mit einem Dichtring 5 versehen ist, der mittels eines Halteringes 6 in einer Umfangsnut 4 des Führungsholms 1 einliegt.

An dem einem nicht dargestellten Bremssattel zugewandten Ende befindet sich am Faltenbalg 2 eine Dichtlippe 7, die sich in Funktionsstellung umfänglich dichtend am Führungsholm 1 abstützt. Dabei ist der Faltenbalg 2 mittels eines Befestigungskragens 9 am Bremssattel angeschlossen.

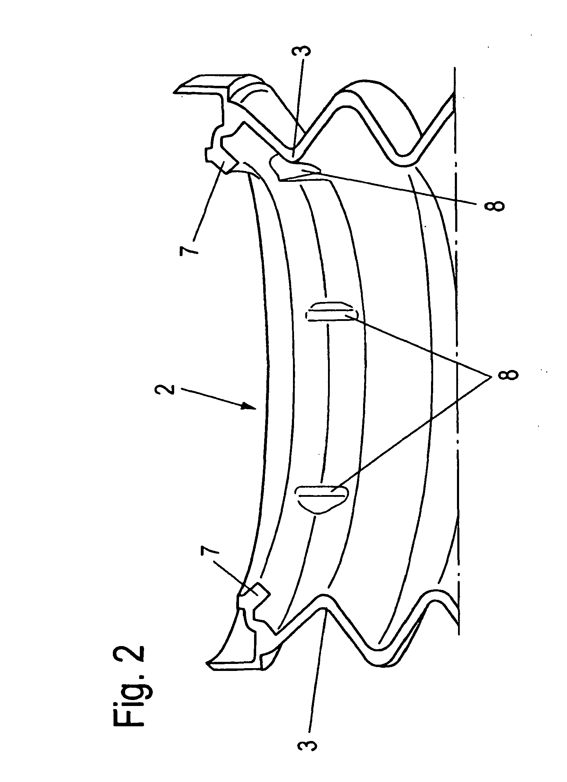

Wie insbesondere in der Figur 2 zu erkennen ist, ist die Dichtlippe 7 mit der benachbarten Faltung 3 starr verbunden, wozu, bezogen auf die Längsachse des Faltenbalgs 2, sich erstreckende Stege 8 vorgesehen sind, die an der Dichtlippe 7 einerseits und an der Faltung 3 andererseits befestigt sind.

Vorzugsweise sind die Stege 8 gleichmäßig, d.h. in gleichem Winkelabstand zueinander über den Umfang verteilt.

Bei einer Volumenverringerung des Innenraumes durch Zusammenschieben des Faltenbalges 2 erhöht sich der herrschende Innendruck, der die Faltungen 3 radial aufbläht. Dies ist in der Figur 1 durch die radial sich erstreckenden Pfeile angedeutet.

Durch diese Bewegung der Faltungen 3 wird über die starre Anbindung die Dichtlippe 7 mit vom Führungsholm 1 abgehoben, so dass, durch die axialen Pfeile kenntlich gemacht, der Innendruck durch Entweichen der Luft ausgeglichen wird.

Die Figur 1 zeigt also einen Zustand, bei dem der Faltenbalg 2 teilweise zusammengedrückt ist und die Dichtlippe 7 mit Luftdurchlass zum Führungsholm 1 angehoben ist.

Diese Stellung ist in der Figur 2 auf der rechten Seite verdeutlicht, während die linke Seite eine Funktionsstellung wiedergibt, in der die Dichtlippe 7 am Führungsholm 1 dichtend anliegt.

## Patentansprüche

1. Einerseits an einem Führungsholm (1) und andererseits an einem relativ dazu bewegbaren Bauteil einer Scheibenbremse, insbesondere eines Nutzfahrzeuges, jeweilsendseitig befestigter Faltenbalg (2), mit einer in dem dem Bauteil zugewandten Endbereich angeordneten, umfänglichen Dichtlippe (7), die in Funktionsstellung dichtend am Führungsholm (1) anliegt, **dadurch gekennzeichnet, dass** die Dichtlippe (7) mit der benachbarten Faltung (3) starr verbunden ist und bei radialer Aufblähung des Faltenbalges (2) gegenüber dem Führungsholm (1) angehoben ist.

2. Faltenbalg nach Anspruch 1, **dadurch gekennzeichnet, dass** die starre Verbindung aus Stegen (8) gebildet ist.

3. Faltenbalg nach Anspruch 2, **dadurch gekennzeichnet, dass** die Stege (8) gleichmäßig unter gleichem Winkelabstand zueinander über den Umfang verteilt sind.

4. Faltenbalg nach einem der vorhergehenden Ansprüche 2 bis 3, **dadurch gekennzeichnet, dass** die Stege (8) an die Faltung (3) und/oder die Dichtlippe (7) angeformt sind.

5. Faltenbalg nach einem der vorhergehenden Ansprüche 2 bis 4, **dadurch gekennzeichnet, dass** die Stege (8) formschlüssig mit der Dichtlippe (7) und/oder der Faltung (3) verbunden sind.

## Claims

1. Bellows (2) having one end secured to a guide member (1) of a disc brake, in particular of a commercial vehicle, and the other end secured to a component which is movable relative to the guide member (1), said bellows (2) comprising a circumferential sealing lip (7) which is located in the end region facing the component and which bears against the guide member (1) while forming a seal in its functional position, **characterised in that** the sealing lip (7) is rigidly joined to the adjacent corrugation (3) and is raised with respect to the guide member (1) if the bellows (2) is radially inflated.

2. Bellows according to claim 1, **characterised in that** the rigid joint is formed from webs (8).

3. Bellows according to claim 2, **characterised in that** the webs (18) are evenly distributed along the circumference at equal angular distances.

4. Bellows according to claim 2 or 3, **characterised in that** the webs (8) are moulded integrally on the corrugation (3) and/or on the sealing lip (7).

5. Bellows according to any of claims 2 to 4, **characterised in that** the webs (8) are positively joined to the sealing lip (7) and/or to the corrugation (3).

## Revendications

1. Soufflet (2) fixé à un côté terminal respectif, d'un côté, à un longeron de guidage (1) et, d'autre côté, à un composant d'un frein à disque mobile relativement audit longeron, en particulier d'un véhicule utilitaire, qui comprend une lèvre d'étanchéité (7) circonférentielle disposée dans une zone terminale en face dudit composant, laquelle lèvre porte contre de manière étanche audit longeron de guidage en sa position fonctionnelle, **caractérisé en ce que** ladite lèvre d'étanchéité (7) est relié au pliage adjacent (3) de façon rigide et est soulevée relativement audit longeron de guidage (1) au cas de gonflement radial dudit soufflet (2).

2. Soufflet selon la revendication 1, **caractérisé en ce que** le raccord rigide est formé en entretoises (8).

3. Soufflet selon la revendication 2, **caractérisé en ce que** lesdites entretoises (8) sont distribuées de façon uniforme sur la circonférence à un écart angulaire égal d'une de l'autre.

4. Soufflet selon une quelconque des revendications précédentes 2 à 3, **caractérisé en ce que** lesdites entretoises (8) sont formées de manière intégrale audit pliage (3) et/ou à ladite lèvre d'étanchéité (7).

5. Soufflet selon une quelconque des revendications précédentes 2 à 4, **caractérisé en ce que** lesdites entretoises (8) sont reliées de manière positive à ladite lèvre d'étanchéité (7) et/ou audit pliage (3).
